# EUROPÄISCHE PATENTANMELDUNG

(11) **EP 1 156 090 A2**
(43) Veröffentlichungstag der Anmeldung: **21.11.2001**
(21) Anmeldenummer: 01111303.2
(22) Anmeldetag: 09.05.2001
(51) Int. Cl.: C09D 161/06, C09D 161/12, C08L 61/06, C08L 61/12, C08K 5/05, C08K 5/053

(54) **Beschichtungslösung aus mehreren Ausgangsstoffen zur Herstellung eines gehärteten Überzugs für vorzugsweise metallische Oberflächen**

(30) Priorität: 17.05.2000 DE 10024256
(71) Anmelder: DaimlerChrysler AG, 70567 Stuttgart (DE)
(72) Erfinder: Maichel, Daniela, 73111 Lauterstein (DE); Marten, Anita, 89134 Blaustein (DE)

(57) **Zusammenfassung**

Die Erfindung betrifft eine Beschichtungslösung aus Ausgangsstoffen zur Herstellung eines gehärteten Überzugs für vorzugsweise metallische Oberflächen. Die Ausgangsstoffe sind organische Polymer mit organischen oder anorganischen Zusätzen sowie Melaminharze und/oder Epoxiharze und/oder Polyurethanharze und/oder Alkydharze und/oder Mischungen daraus. Des weiteren ist die Beschichtungslösung im flüssigen Zustand wasserhaltig, wobei das Bindemittel aus 50-100% Phenolharz bevorzugt auf Phenol- und/oder Resorcinbasis besteht.

## Beschreibung

Die Erfindung betrifft eine Beschichtungslösung aus mehreren Ausgangsstoffen zur Herstellung eines gehärteten Überzugs für vorzugsweise metallische Oberflächen gemäß dem Oberbegriff des Anspruchs 1.

Insbesondere in der Kfz-Industrie ist es üblich, Bleche, die zur späteren Lackierung vorgesehen sind, einer Vorbehandlung zu unterziehen. Unter anderem wird hierbei in einem mehrstufigen Auftrageprozeß, der auch mehrere Trocknungs- bzw. Abbindephasen aufweisen kann, z.B. eine Korrosionsschutzschicht, bspw. eine Phosphatschicht und ein Haftgrund aufgebracht. Die Aufbringung zumindest einzelner dieser Schichten ist kostenintensiv und aufgrund von Lösungsmitteln und/oder Schwermetallen zum Teil ggf. umweltproblematisch.

Aufgabe der Erfindung ist eine die Herstellung einer Beschichtungslösung, mit welcher der der gesamte Auftrageprozeß vereinfacht und verbilligt ist, wobei möglichst die Umweltakzeptanz der Beschichtungslösung selbst uns der sich nach der Härtung aus der Beschichtungslösung ergebenden Beschichtung erhöht ist.

Die Aufgabe wird mit einer Beschichtungslösung mit den Merkmalen des Anspruchs 1 gelöst. Bei der erfindungsgemäßen wäßrigen oder wasserhaltigen Beschichtungslösung handelt es sich um eine härtbare, weitgehend universell einsetzbare, organisch-polymere Beschichtungslösung mit schützender, und/oder korrosionschützender und/oder haftungsvermittelnder Wirkung. Die erfindungsgemäße Beschichtungslösung wird bevorzugt auf reinen und/oder vorbehandelten und/oder vorbeschichteten Metalloberflächen eingesetzt und ist insbesondere auf die Bedürfnisse im Automobilbau ausgerichtet. Die flüssige Beschichtungslösung kann weitgehend universell auf beliebige, bevorzugt metallische Träger wie z. B. Stahl, Aluminium, Magnesium, entsprechende Legierungen, verzinkter Stahl direkt oder auch nach gängigen Vorbehandlungsverfahren wie z. B. Verzinkung, Phosphatierung, Chromatierung aufgebracht werden kann.

Durch die Erfindung können die momentan sehr unterschiedlichen Ausgangsstoffe und/oder die Beschichtungsverfahren und/oder die Prozeße vereinfacht werden. Dies erfolgt durch Einsparung von Verfahrensschritten womit u.a.die Kosten gesenkt sind.

Des weiteren können preiswertere Ausgangsstoffe verwendet werden.

Ferner können die Überzüge mit geringerer Schichtdicke aufgetragen werden, wodurch z.B. auch noch die Umweltakzeptanz verbessert ist.

Von besonderem Vorteil im Hinblick auf die Umweltakzeptanz ist ferner noch, daß bei diesen Beschichtungslösungen i.a. auch auf Schwermetallzusätze als Ausgangsstoff verzichtet werden kann.

Bei saurer Lösung kann sogar in weitem Rahmen noch auf organische Lösemittel verzichtet werden. Bei der alkalischen Lösung kann sogar noch in höherem Umfang auf Wasser als Lösemittel zurückgegriffen werden.

Die Basisrezeptur der erfindungsgemäßen Beschichtungslösung ist einheitlich eine wäßrige und damit umweltfreundliche Beschichtungslösung, die universell auf den im Automobilbau relevanten Trägermaterialien eingesetzbar ist.

Die Beschichtungslösung enthält als Bindemittel Phenolharz, bevorzugt auf Phenol und/oder Recorcinbasis, ausgestaltet als Resol oder Novolak-Typ, dem andere Harze oder Bestandteile wie Melaminharz, Epoxiharz, Casein, Alkydharz Polyurethanharz o.ä. beigefügt sein können.

Weiterhin enthält die Beschichtungslösung Lösemittel, das bevorzugt Wasser ist, bei Bedarf Härter, und je nach Bedarf weitere Substanzen, z.B. Alkohole, bevorzugt, 1,2-Diole, Phosphonsäuren, organische oder anorganische Phosphate und anderes.

Die verwendeten oder beigefügten Ausgangsstoffe sind i.a. im Gestehungspreis mit den bisher verwendeten Ausgangsstoffen vergleichbar oder kostengünstiger.

Da in der Regel dünnere Schichten zu einem vergleichbaren Ergebnis führen, kommen geringere Materialmengen zum Einsatz, was sich vor allem im Gesamtpreis aber auch als Gewichtseinsparung am fertigen Auto bemerkbar macht.

Ein weiterer ökologischer Aspekt wird über das verwendete Beschichtungsverfahren gegeben: Als Ersatz für teure und aufwendige Abscheide- bzw. Auftragsverfahren kommen bei der vorliegenden Erfindung bevorzugt Tauchen, Walzen oder Spritzen zum Einsatz.

Mit der Basisrezeptur können die im Automobilbau gängigen Materialien, insbesondere die metallischen Werkstoffe, beschichtet werden.

Für spezielle Teile oder Anforderungen ist es u.U. angebracht, die Basisrezeptur bedarfs- und anforderungsorientiert zu modifizieren, wobei die Verträglichkeit mit anderen von der Basisrezeptur abgeleiteten Varianten und der Basisrezeptur selbst in der Regel erhalten bleibt.

Verfahrensschritte werden insofern eingespart, als bei der vorliegenden Erfindung die Herstellung des härtbaren Überzugs einstufig erfolgt, während nach gängiger Praxis im Automobilbau die Vorbehandlung in der Regel mehrstufig abläuft, beispielsweise in Form von Aktivierung, Phosphatierung und elektrischem Abscheidungsprozeß (Tauchlackierung) neben zwischengeschalteter Spülschritte.

Weitere sinnvolle Ausgestaltungen sind den verbleibenden Ansprüchen entnehmbar. Im übrigen wird die Erfindung anhand von nachfolgend dargestellten Beispielen näher erläutert.

### Beispiel 1

24 g mit Wasser verdünnbares Phenolresolharz, (Firma Bakelite)
6 g mit Wasser verdünnbares Melaminharz, (Firma Vianova)
2 g 1,2-Octandiol
5 g 1,2-Hexandiol
wird mit Wasser auf 100 g ergänzt.

### Beispiel 2

18g mit Wasser verdünnbares Phenolresolharz, (Firma Bakelite)
2 g mit Wasser verdünnbares Melaminharz, (Firma Vianova)
2 g 1,2-Octandiol
5 g 1,2-Hexandiol
1 g Zink-Glycerophosphat
wird mit Wasser auf 100 g ergänzt.

### Beispiel 3

27g mit Wasser verdünnbares Phenolresolharz, (Firma Bakelite)
3 g mit Wasser verdünnbares Melaminharz, (Firma Vianova)
2 g 1,2-Octandiol
5 g 1,2-Hexandiol
1 g Cyanursäure
2 g Zinkphosphat
wird mit Wasser auf 100 g ergänzt.

### Beispiel 4

24g mit Wasser verdünnbares Phenolresolharz, (Firma Bakelite)
3 g mit Wasser verdünnbares Melaminharz, (Firma Vianova)
3 g mit Wasser verdünnbares Alkydharz, (Firma Vianova)
2 g 1,2-Octandiol
5 g 1,2-Hexandiol
wird mit Wasser auf 100 g ergänzt.

### Beispiel 5

12 g Phenolharz, Novolaktyp (Firma Bakelite)
3 g mit Wasser verdünnbares Melaminharz (Firma Vianova)
2 g Decandiol
10 g 1,2-Hexandiol
25g Methoxyethanol
10 g Pentanol
2 g Hexamethylentetramin
wird mit Wasser auf 100 g ergänzt.

### Beispiel 6

15 g Phenolharz, Novolaktyp (Firma Bakelite)
2 g Decandiol
10 g 1,2-Hexandiol
25g Methoxyethanol
10 g Pentanol
2 g Hexamethylentetramin
0,2 g 1-Hydroxyethan-1,1-diphosphonsäure Netzmittel
wird mit Wasser auf 100 g ergänzt.

### Beispiel 7

20 g Phenolharz, Novolaktyp (Firma Bakelite)
2 g Decandiol
10 g 1,2-Hexandiol
25 Methoxyethanol
10 g Pentanol
2 g Hexamethylentetramin
2 g Triallylcyanurat
wird mit Wasser auf 100 g ergänzt.

### Beispiel 8

20 g Phenolharz, Novolaktyp (Firma Bakelite)
2 g Decandiol
10 g 1,2-Hexandiol
25g Methoxyethanol
10 g Pentanol
2 g Hexamethylentetramin
1 g 2,4-Dihydroxybenzaldehyd
wird mit Wasser auf 100 g ergänzt.

### Beispiel 9

20 g Phenolharz, Novolaktyp (Firma Bakelite)
1 g Zink-Glycerophosphat
2 g Decandiol
10 g 1,2-Hexandiol
20g Methoxyethanol
10 g Pentanol
2 g Hexamethylentetramin
1 g 2,4-Dihydroxybenzaldehyd
2 g Triallylcyanurat
1 g Cyanursäure
2 g Zinkphosphat
0,2 g 1-Hydroxyethan-1,1-diphosphonsäure Netzmittel
wird mit Wasser auf 100 g ergänzt.

### Beispiel 10

9 g mit Wasser verdünnbares Phenolresolharz, (Firma Bakelite)
1 g mit Wasser verdünnbares Melaminharz, (Firma Vianova)
2 g 1,2-Octandiol
5 g 1,2-Hexandiol
5 g Leitfähigkeitspigment
wird mit Wasser auf 100 g ergänzt.

### Beispiel 11

10 g Phenolharz, Novolaktyp (Firma Bakelite)
2 g Decandiol
10 g 1,2-Hexandiol
20g Methoxyethanol
5 g Pentanol
1 g Hexamethylentetramin
30 g Leitfähigkeitspigment
wird mit Wasser auf 100 g ergänzt.

Mit den Beschichtungslösungen wurden gereinigte Teile aus verschiedenen Stahlsorten, und/oder phosphatiertem Stahl, und/oder verzinktem Stahl, und/oder Aluminium, und/oder diversen Aluminiumlegierungen durch Tauchen und/oder Walzen und/oder Spritzen beschichtet. Anschließend wurde zwischen 0-30 min thermisch bei 160-200°C der gehärtete Überzug hergestellt. Anschließend wurden die beschichteten Teile allgemein übliche Prüfungen bezüglich Verformbarkeit und/oder Korrosionsfestigkeit und/oder anderem unterzogen.

Ein Teil der Proben wurde weiter beschichtet, und/oder lackiert, beispielsweise mit Klarlack oder Serienlackaufbau. Die aufgetragene Lackschicht wurde beispielsweise durch Anritzen beschädigt und die üblichen Prüfverfahren auf Korrosionsfestigkeit durchgeführt.

Bei diesen Versuchen wiesen die beschichteten Substrat Ergebnisse auf, die mit denen herkömmlich beschichteter Substrate zumindest vergleichbar waren.

Je nach dem vorliegenden Anwendungsfall können verschiedene Ausgestaltungen an Beschichtungslösungen zur Anwendung kommen, gelegentlich sind auch Mehrfachauftragungen erforderlich, bei sehr guter Verträglichkeit der einzelnen Beschichtungen miteinander. Für den jeweils vorliegenden Anwendungsfall geeignete Beschichtungslösungen erfüllen die gestellten Anforderungen.

In vorteilhafter Weise können allen Beschichtungslösungen, egal ob Resoltyp oder Novolaktyp seitens des Phenolharzes, egal welche Harzzusätze, 1,2-Diol zugesetzt werden.

Phosphonsäuren und (Zn-)Phosphate verbessern die Ergebnisse beim Stahl und Abkömmlingen. Bei Aluminiumsubstraten können Zusätze von Zirkon- und Titanfluorokomplexen beigegeben werden.

Die 1,2-Dioele, die flüssig und/oder als Lösungen fester 1,2-Diole, die auch Lösungen von festen 1,2-Diolen in flüssigen 1,2-Diolen sein können, sind vorteilhaft bei allen hier verwendeten Beschichtungslösungen, da sie Elastizität der Beschichtung erhöhen. Eingesetzt werden sie insbesondere als Lösungsmittel, Reaktivverdünner, Beschichtungshilfstoff, Filmbildungs-hilfsstoff und Weichmacher.

### Funktion der Phosphonsäure

Durch den Einsatz der Phosphonsäure können mehrere Verfahrensschritte lassen sich zu einem Schritt zusammengefaßt werden, da kleine und sehr polare Phosphonsäuremoleküle aus der flüssigen Beschichtungslösung heraus bevorzugt zu der Metalloberfläche diffundieren, während die großen und unbeweglichen Moleküle der Polymerlösung darüber zu liegen kommen und das Darunterliegende abdecken. (Vergleichbar einer Phasentrennung)

Ein weiterer Vorteil ist, daß auf der Metalloberfläche durch sauren Angriff (Phosphonsäuren sind gut sauer) durch ganz leichten Ätzangriff Eisenionen entstehen die sofort mit der angreifenden Phophonsäure zu einer schwerlöslichen Eisenphosphonatschicht reagieren unter Ausbildung einer schönen Schutzschicht, vergeilichbar der Phosphatierung.

Eine kleine Menge Zink liefert Zinkionen und neben Eisen- auch Zinkphosphonat. Anders als bei der Phosphatierung tragen die Phosphonsäuren aber einen organischen Rest, der, sofern er z. B. freie Hydroxylgruppen trägt, in einer Kondensationsreaktion unter Wasserabspaltung chemisch in die Härtungsreaktion des Harzes miteinbezogen wird. Das entstehende Wasser stört nicht, es verdampft gemeinsam mit dem ohnehin zugesetzten Wasser. Die Umgebung muß wäßrig und polar sein, weil sonst die Phosphonsäure nicht oder nicht gleichmäßig verteilt in der Beschichtungslösung vorliegt

Anders als bei der Phosphatierung sind Phosphonat- und Harz-schicht nach der Härtung chemisch miteinander verknüpft und bilden eine bessere Barriere als zwei separate Schichten, wobei die Phosphonatschicht brav auf der Oberfläche und das schützende Harz fein säuberlich darüber liegt, ordentlich gehärtet und dünner ist, als beim Stand der Technik, und das alles bei einer einstufigen Beschichtung.

Organische Phosphorsäuren bzw. Phosphate haben ähnliche Eigenschaften wie die Phosphonsäuren bzw. Phosphonate mit dem Unterschied, daß sie eine Sollbruchstelle haben. Sie sind ebenso polar und wenn diffundieren je nach Molekülgröße schneller oder langsamer an die Metalloberfläche und bilden mit Eisenionen dort Schutzschichten aus .

Bei Zutritt von Wasser und Sauerstoff hydrolysiert das organische Phosphat, d.h. die Schutzschicht wird angegriffen. Dies geschieht bei Phosphonaten nicht. Danach bildet sich allerdings zusammen mit den entstehenden Eisenionen wieder schwerlösliches Eisenphosphat. Auf diese Weise kann ein selbstheilender Effekt der fertigen Beschichtung erreicht werden. Man muß nur das Phosphat, das bevorzugt als freie Säure oder als Zinksalz eingesetzt wird, an große und unbewegliche Harzmolekül chemisch binden, eher aliphatisch (an eine C-Kette) denn aromatisch (am einen Benzolring), weil die später gewünschte Hydrolyse am Aliphaten leichter abläuft. Phosphat gelangt so bei der Beschichtung dann eher nicht auf die Metalloberfläche, sondern wird eher zur Metalloberfläche hin orientiert, im Harz eingebettet und bildet ein Phosphatdepot, das genau dann, wenn es gebraucht wird zur Verfügung steht.

Erfolgt bei der fertigen Beschichtung dann später eine Beschädigung, kann bekanntlich Korrosion erst stattfinden, wenn Wasser und Sauerstoff einwirken. Gleichzeitig kommt dann aber auch das im Harz gebundene Phosphat mit Wasser und Sauerstoff in Berührung, und es erfolgt eine alkalisch katalysierte Hydrolyse, wobei Phosphationen freigesetzt werden. Diese können dann mit Zinkionen aus in der Schicht vorhandenem Zink oder entstehenden Eisenionen unter Ausbildung einer neuen Schicht reagieren, die die Beschädigung mechanisch schließt.

Bei der Ausgestaltung mit den organischen Phosphaten verbleiben diese also in der Harz-Schicht und bilden dort ein Depot. Im Falle einer später eintretenden Beschädigung findet unter Beteiligung von eintretendem Wasser und Sauerstoff findet unter Ausbildung einer neuen Schutzschicht eine chemische Reaktionen statt.

Resorcin und/oder 3-Methoxyphenol und/oder 1,3-Dimethoxybenzol sind Monomere der verwendeten Harzbausteine, bzw. Abkömmlinge davon. Mit diesen Stoffen bzw. mit Oligomeren oder Prekondensaten, in denen sie enthalten sind, wird eine höhere Vernetzung und damit ein besserer Korrosionsschutz erreicht.

Gleichzeitig zeigen diese Komponeten eine bessere Löslichkeit in Wasser d.h. ein höherer Wasseranteil und ein niedriger Anteil an organischem Lösemittel in der Beschichtungslösung ist möglich, sie wird umweltfreundlicher.

2,4-Dihydroxybenzaldehyd und Triallylcyanurat sind monomere Zusätze, die ebenfalls eine höhere Vernetzung ermöglichen Cyanursäure in Kombination mit Zinkionen ist ein korrosionsinhibitor Montmorillonit ist ein anorganisches, glimmerähnliches Produkt das die Fähigkeit zur Quellung besitzt und somit als Verdicker wirkt, sonst aber nicht reagiert.

## Patentansprüche

1. Beschichtungslösung aus Ausgangsstoffen zur Herstellung eines gehärteten Überzugs für vorzugsweise metallische Oberflächen,
**dadurch gekennzeichnet,**
**daß** die Ausgangsstoffe organische Polymer mit organischen oder anorganischen Zusätzen sind,
**daß** die Ausgeangsstoffe ferner Melaminharze und/oder Epoxiharze und/oder Polyurethanharze und/oder Alkydharze und/oder Mischungen daraus sind,
**daß** die Beschichtungslösung im flüssigen Zustand wasserhaltig ist, und
**daß** das Bindemittel aus 50-100% Phenolharz bevorzugt auf Phenol- und/oder Resorcinbasis besteht.

2. Beschichtungslösung nach Anspruch 1
**dadurch gekennzeichnet,**
**daß** die Beschichtungslösung 5-70 Gew.% Bindemittel, 0-40 Gew.% Härter, 15-95 Gew.% Wasser, und 0-65 Gew.% organische und/oder anorganische Zusätze enthält.

3. Beschichtungslösung nach Anspruch 1 oder 2,
**dadurch gekennzeichnet,**
**daß** die Ausgangsstoffe nach dem Auftrag auf das Substrat mit dem Substrat und/oder untereinander chemisch reagieren, wobei eine Erhöhung von Molgewichten durch (Nach-)Polymerisation, (Poly-)Kondensation und/oder (Poly-)Addition beim Bindemittel eintritt,
und **daß** unter Ausbildung von Blockpolymerisaten und/oder Kettenverlängerungen und/oder Verzweigungen und/oder Vernetzungen, und/oder Derivaten durch Einführung bestimmter chemischer Gruppierungen wie beispielsweise Aromaten oder alphatische Kohlenstoffketten und/oder funktioneller Gruppen durch Umsatz der Bindemittelkomponenten untereinander und/oder mit entsprechend zugesetzten Monomeren, Oligomeren und/oder Prekondensaten und/oder anderen Zusätzen auf oder mit der Oberfläche des beschichteten Trägers die Einstellung der gewünschten chemischen und physikalischen Eigenschaften der gebrauchsfertigen Beschichtung erfolgt.

4. Beschichtungslösung nach wenigstens einem der Ansprüche 1 bis 3,
**dadurch gekennzeichnet,**
**daß** die chemische Reaktion z.B. chemisch, optisch, thermisch ausgelöst, gesteuert bzw. unterstützbar ist.

5. Beschichtungslösung nach wenigstens einem der Ansprüche Anspruch 1 bis 4,
**dadurch gekennzeichnet,**
**daß** die Beschichtungslösung 0-40% in Abhängigkeit vom verwendeten Bindemittel geeignete Härter und Vernetzer enthält und/oder diese zum richtigen Zeitpunkt aus entsprechenden Komponenten in erforderlicher Menge freisetzbar sind.

6. Beschichtungslösung nach wenigstens einem der Ansprüche Anspruch 1 bis 5,
**dadurch gekennzeichnet,**
**daß** die Beschichtungslösung 0-65 Gew.% organisches Lösemittel und/oder Alkohol oder Alkoholmischungen und/oder Polyole enthält.

7. Beschichtungslösung nach wenigstens einem der Ansprüche Anspruch 1 bis 6,
**dadurch gekennzeichnet,**
**daß** die Beschichtungslösung 0-65 Gew.% an mehrwertigem Alkohol, der flüssig oder fest sein kann, bevorzugt 1,2-Diole mit mindestens 5 C-Atomen, aufweist.

8. Beschichtungslösung nach wenigstens einem der Ansprüche 1 bis 7,
**dadurch gekennzeichnet,**
**daß** die Beschichtungslösung 0-20% bevorzugt ungebundene Phosphonsäuren aufweist.

9. Beschichtungslösung nach Anspruch 8,
**dadurch gekennzeichnet,**
**daß** die Restkette der funktionellen Gruppe der Phosphonsäure bevorzugt mindestens eine vernetzungsfähige Hydroxyl(OH)-und/oder Amin (NH, NH₂)-Gruppe aufweist.

10. Beschichtungslösung nach Anspruch 9,
**dadurch gekennzeichnet,**
**daß** der pH-Wert der Beschichtungslösung < 7, bevorzugt im Bereich von 5-6 liegt.

11. Beschichtungslösung nach Anspruch 10,
**dadurch gekennzeichnet,**
**daß** die Beschichtungslösung 0-40 Gew.% organische und/oder anorganische Phosphate aufweist.

12. Beschichtungslösung nach Anspruch 11,
**dadurch gekennzeichnet,**
**daß** das Phosphat in der Beschichtungslösung entweder rein anorganisch und/oder organisch als reaktives Monomer und/oder gebunden an ein Harzoligomer und/oder Prepolymer und/oder ein reaktives oder inreaktives Harzpolymer, und dort bevorzugt gebunden als Zwischenglied und nicht an einen Aromaten, bevorzugt als Zn-Salz, und/oder bevorzugt in Kombination mit einer kleinen Menge an Zink vorliegt.

13. Beschichtungslösung nach Anspruch 12,
**dadurch gekennzeichnet,**
**daß** eine für Leichtmetalle wie z.B. Al oder Al-Legierungen vorgesehene Beschichtungslösung, Titanionen, und/oder Zirkoniumionen und/oder Fluoridionen aufweist.

14. Beschichtungslösung nach wenigstens einem der Ansprüche 8 bis 13,
**dadurch gekennzeichnet,**
**daß** der Beschichtungslösung bei einer Konzentration der Phosphonsäuren > 0, 0-65 Gew.% an organisch gebundenem Phosphat bevorzugt als Polymer, Prekondensat und/oder Oligomer zugesetzt werden.

15. Beschichtungslösung nach wenigstens einem der Ansprüche 1 bis 14,
**dadurch gekennzeichnet,**
**daß** die Beschichtungslösung 0-65 Gew.% an organischen oder anorganischen Zusätzen enthält, mittels derer der Beschichtung spezielle Eigenschaften verliehen werden, bevorzugt anorganische Komponenten, die eine elektrische Leitfähigkeit aufweisen.

16. Beschichtungslösung nach wenigstens einem der Ansprüche 1 bis 15,
**dadurch gekennzeichnet,**
**daß** die Beschichtungslösung 0-65 Gew.% an organischen oder anorganischen Zusätzen enthält, gemäß dem allgemeinen Stand der Technik, namentlich Zn-Pulver, und/oder Zn-Ionen, und/oder Phosphat-Ionen, und/oder Resorcin und/oder 3-Methoxyphenol und/oder 1,3-Dimethoxybenzol jeweils als Monomer, und/oder Oligomer, und/oder Prekondensat, 2,4-Dihydroxybenzaldehyd, und/oder Cyanursäure, und/oder Triallylcyanurat, und/oder Montmorillonit, und/oder Montmorillonit-haltige Additive, und/oder Aktivbentonit und/oder andere und/oder kommerziell angebotene Additive.

17. Verwendung einer Beschichtungslösung nach wenigstens einem der Ansprüche 1 bis 16,
zur Herstellung eines härtbaren Überzugs im Automobilbau.

18. Verwendung einer Beschichtungslösung nach wenigstens einem der Ansprüche 1 bis 16,
für ein Coil Coating, bevorzugt auf einem metallischen Träger.

19. Verwendung einer Beschichtungslösung nach wenigstens einem der Ansprüche 1 bis 16,
zur Beschichtung bereits geformter, bevorzugt metallischer Träger.

20. Verwendung einer Beschichtungslösung nach wenigstens einem der Ansprüche 1 bis 16,
zur Vorbeschichtung von später zu lackierenden Oberflächen.

21. Verwendung einer Beschichtungslösung nach wenigstens einem der Ansprüche 1 bis 16,
zur Beschichtung bereits beschichteter Oberflächen.
